# EUROPÄISCHE PATENTANMELDUNG

(11) **EP 0 695 105 A2**
(43) Veröffentlichungstag der Anmeldung: **31.01.1996**
(21) Anmeldenummer: 95110587.3
(22) Anmeldetag: 06.07.1995
(51) Int. Cl.: H04Q 7/38

(54) **Verfahren zur Durchschaltung von Verbindungen bei Anrufen von bzw. zu mobilen Teilnehmern eines zellularen digitalen Mobilfunknetzes**

(30) Priorität: 29.07.1994 DE 4427043
(71) Anmelder: SIEMENS AKTIENGESELLSCHAFT, D-80333 München (DE)
(72) Erfinder: Straka, Peter, Dipl.-Ing., A-1190 Wien (AT)

(57) **Zusammenfassung**

Dadurch, daß virtuelle Teilnehmer (VSN0, VSN1...) in den Speichereinrichtungen (HLR, VLR) des Vermittlungssystems eines Mobilfunknetzes eingerichtet werden, können von den genormten Steuerungsfunktionen abweichende neue mobilfunknetzspezifische Funktionen durchgeführt werden, indem der Anruf vom bzw. zum mobilen Teilnehmer an einen virtuellen Teilnehmer (z.B. VSNx) gerichtet ist. Der virtuelle Teilnehmer unterscheidet sich von dem physikalischen mobilen Teilnehmer dadurch, daß eine Verbindung zu einer Mobilstation nicht aufgebaut und die Verbindung nur in dem Vermittlungssytem selbst existiert. Das jeweilige Übertragungsprotokoll braucht nicht verändert zu werden, da der an den virtuellen Teilnehmer gerichtete Anruf wie jeder andere Anruf eines mobilen Teilnehmers behandelt wird. Auch die Übertragungsprotokolle an den Schnittstellen des Mobilfunknetzes sind davon nicht beeinträchtigt, da die virtuellen Teilnehmer nur in den Speichereinrichtungen innerhalb des Vermittlungssystems vorhanden sind.

## Beschreibung

Die Erfindung betrifft ein verfahren zur Durchschaltung von Verbindungen bei Anrufen von bzw. zu mobilen Teilnehmern eines zellularen digitalen Mobilfunknetzes gemäß dem Oberbegriff des Patentanspruchs 1.

Aus der Systembeschreibung "D900-Mobile Communication System", von Huder/Geyer, Siemens AG, 1992 (Bestellnummer A30808-X3231-X-2-7618) ist ein digitales, zellular aufgebautes Mobilfunknetz nach dem GSM-Standard (Global System for Mobile Communication) bekannt. Ein derartiges Mobilfunknetz weist Schnittstellen und Übertragungsprotokolle zur Durchführung verschiedener Funktionen im Netz auf, die genormt sind, um die Kompatibilität zwischen den Netzeinrichtungen unterschiedlicher Struktur und Arbeitsweise gewährleisten zu können. Wenn ein neues mobilfunknetzspezifisches Leistungsmerkmal oder ein neuer mobiler Teilnehmerdienst im Mobilfunknetz eingeführt werden soll, müßten üblicherweise zusätzliche Daten in den standardisierten Steuerungs- und Datenoperationen übertragen werden. Dies führt bei standardisierten Protokollen und Schnittstellen zu Problemen, da für die neuen Daten keine Datenfelder in den Protokollen zur Verfügung stehen. Angenommen, es fände eine Definition von zusätzlichen Datenfeldern in den Protokollen eines einzelnen Mobilfunknetzes in einem Land statt, hätte dies in den Mobilfunknetzen anderer Länder Fehlermeldungen zur Folge, und eine internationale Verbindung fände nicht statt.

Beispiele für derartige mobilfunknetzspezifische Funktionen, die von dem standardisierten digitalen Mobilfunknetz derzeit nicht unterstützt werden, sind besondere Anrufe von bzw. zu den mobilen Teilnehmern, deren Informationen im Vermittlungssystem (Switching Subsytem) des Mobilfunknetzes zwischen den einzelnen Einrichtungen übertragen werden müssen, oder nicht GSM-standardisierte Aufgaben, die an bestimmte Einrichtungen des Vermittlungssytems gerichtet werden. Das Vermittlungssystem übernimmt dabei die Durchschaltung der entsprechenden Verbindungen bei den Anrufen von bzw. zu den mobilen Teilnehmern des Mobilfunknetzes.

Es ist Aufgabe der vorliegenden Erfindung, ein Verfahren zur Durchschaltung von Verbindungen bei Anrufen von bzw. zu den mobilen Teilnehmern anzugeben, durch das nicht GSM-konforme mobilfunknetzspezifische Funktionen ohne Verletzung der bestehenden Protokolle und ohne Manipulation der für die Datenübertragungen vorgesehenen Datenfelder im Mobilfunknetz zusätzlich ausgeführt werden können.

Diese Aufgabe wird durch die Merkmale des Patentanspruchs 1 gelöst. Weiterbildungen der Erfindung sind in den Unteransprüchen angegeben.

Dadurch, daß virtuelle Teilnehmer in den Speichereinrichtungen des Vermittlungssystems eingerichtet werden, können von den genormten Steuerungsfunktionen abweichende neue mobilfunknetzspezifische Funktionen durchgeführt werden, indem der Anruf vom bzw. zum mobilen Teilnehmer an einen virtuellen Teilnehmer gerichtet ist. Der virtuelle Teilnehmer unterscheidet sich von dem physikalischen mobilen Teilnehmer dadurch, daß keine Verbindung zu einer Mobilstation aufgebaut und die Verbindung nur in dem Vermittlungssytem selbst existiert. Das jeweilige Übertragungsprotokoll braucht nicht verändert zu werden, da der an den virtuellen Teilnehmer gerichtete Anruf wie jeder andere Anruf eines mobilen Teilnehmers behandelt wird. Auch die Übertragungsprotokolle an den Schnittstellen des Mobilfunknetzes sind davon nicht beeinträchtigt, da die virtuellen Teilnehmer nur in den Speichereinrichtungen vorhanden sind.

Gemäß Weiterbildungen der Erfindung kann durch die neue mobilfunkspezifische Funktion ein mobiler Teilnehmerdienst ausgeführt oder ein gesonderter Anruf entweder einem einzigen mobilen Teilnehmer oder einer Gruppe von mobilen Teilnehmern - wobei jeder Gruppe von Teilnehmern ein virtueller Teilnehmer zugeordnet ist - bereitgestellt werden.

Einzelheiten der Erfindung werden anhand eines in den Figuren dargestellten Ausführungsbeispiels näher erläutert. Im einzelnen zeigen
- Figur 1: den Verbindungsaufbau im Vermittlungssystem des Mobilfunknetzes bei Nutzung eines nicht genormten mobilen Teilnehmerdienstes unter Verwendung von virtuellen Teilnehmern im Heimatregister und im Besucherregister und
- Figur 2: den Verbindungsaufbau im Vermittlungssystem des Mobilfunknetzes zur Durchführung einer mobilfunkspezifischen Steuerungsfunktion unter Verwendung von virtuellen Teilnehmern im Heimatregister.

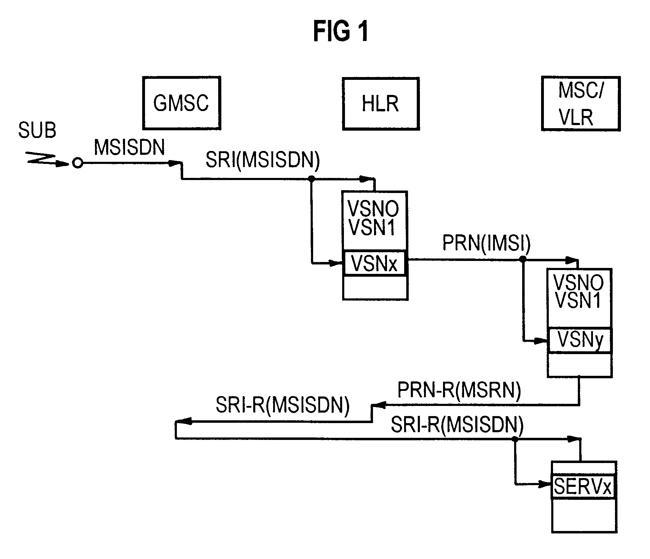

Figur 1 zeigt die bei einem Anruf eines - mobilen oder leitungsgebundenen - Teilnehmers SUB betroffenen Einrichtungen des Vermittlungssystems (Switching Subsystem) des zellular aufgebauten digitalen Mobilfunknetzes nach dem GSM-Standard. Die Einrichtungen bestehen aus einem gesonderten Mobilvermittlungssystem GMSC (Gateway-Mobile Service Switching Center) zum Empfang der vom Teilnehmer SUB ausgelösten und im Mobilfunknetz eintreffenden Anrufe, mindestens einem Heimatregister HLR als Datenbasis zur Speicherung der Teilnehmerdaten jedes mobilen Teilnehmers und mindestens einem Besucherregister VLR zur Speicherung der Teilnehmerdaten der in einem vorgegebenen Aufenthaltsgebiet sich aktuell befindlichen mobilen Teilnehmer. Dabei ist jedem lokal begrenztem Aufenthaltsgebiet ein Mobilvermittlungssystem MSC zugeordnet, das jeweils als Vermittlungseinrichtung zur Durchschaltung einer Verbindung zu den in seinem Zuständigkeitsbereich fallenden mobilen Teilnehmern vorgesehen ist.

Das Besucherregister VLR kann mit mehreren Mobilvermittlungssystemen MSC kommunizieren, um die von den Mobilstationen der mobilen Teilnehmer, die in der Datenbasis registriert sind, eintreffenden oder abgehenden Anrufe behandeln zu können. Zur Nutzung eines nicht genormten mobilen Teilnehmerdienstes "Mobile Access Hunting" (MAH), bei dem durch eine Gruppenrufnummer ein am besten geeigneter Zielteilnehmer aus einer Gruppe von mobilen Teilnehmern ausgewählt werden kann, ist es erforderlich, diesen gesonderten Anruf von den üblichen Anrufen, bei denen eine durchgehende Verbindung zu bzw. von dem jeweiligen mobilen Teilnehmer aufgebaut wird, im Vermittlungssystem unterscheiden zu können.

Eine vom Teilnehmer SUB gewählte Rufnummer MSISDN (Mobile Subscriber ISDN Number) - im vorliegenden Fall die den gesonderten Anruf als MAH-Anruf kennzeichnende Gruppenrufnummer - wird vom gesonderten Mobilvermittlungssystem GMSC empfangen. Das gesonderte Mobilvermittlungssystem GMSC frägt beim Heimatregister HLR mittels einer festgelegten Nachricht SRI (Send Routing Info) unter Übermittlung der Rufnummer MSISDN, die zu den für jeden Teilnehmer im Heimatregister HLR registrierten charakteristischen Teilnehmerdaten gehört, an. Die Unterscheidung des gesonderten Anrufs von einem sonstigen üblichen Anruf erfolgt dadurch, daß im Heimatregister HLR durch Vergleich der empfangenen Nummer MSISDN mit den darin gespeicherten Nummern ein virtueller Teilnehmer angewählt wird, während ansonsten ein im Heimatregister HLR registrierter physikalischer mobiler Teilnehmer ermittelt wird.

Der in den Verbindungsaufbau involvierte virtuelle Teilnehmer VSN0, VSN1...ist somit im Heimatregister HLR jeweils gespeichert. Ihm wird ebenso wie den gewöhnlichen physikalischen mobilen Teilnehmern entsprechende Teilnehmerdaten zugewiesen, jedoch verfügt er nicht über die beim gewöhnlichen mobilen Teilnehmer durch dessen Mobilität bedingte "Roaming"-Funktion.Die virtuellen Teilnehmer, bei denen es sich um keine physikalischen mobilen Teilnehmer mit zugehörigen Mobilstationen zum Empfangen und zum Senden von Anrufen handelt, existieren nur in den Datenbasen innerhalb des Vermittlungssystems. Im Heimatregister HLR können mehrere virtuelle Teilnehmer VSN0, VSN1...VSNx... eingerichtet sein.

Als Folge des ausgewählten virtuellen Teilnehmers VSNx, der für den speziellen zusätzlichen Teilnehmerdienst reserviert ist, ermittelt das Heimatregister HLR das in Bezug auf den anrufenden Teilnehmer SUB - beispielsweise anhand örtlicher oder zeitlicher Auswahlkriterien - am beste geeignete Besucherregister VLR als Ziel-Besucherregister mit einem im zugehörigen Aufenthaltsgebiet sich befindlichen mobilen Zielteilnehmer der Zielgruppe aus. Daraufhin erfolgt zwischen dem Heimatregister HLR und dem für den mobilen Zielteilnehmer der Zielgruppe zuständigen und ausgewählten Besucherregister VLR des entsprechenden Mobilvermittlungssystems MSC die übertragung einer Nachricht PRN (Provide Roaming Number). Dabei wird in Analogie zu einem gewöhnlichen Anruf nach GSM-Standard eine Identifikationsnummer IMSI (International Mobile Subscriber Identification) übertragen, die im Heimatregister HLR für den ausgewählten virtuellen Teilnehmer VSNx als Teilnehmerdatum gespeichert ist.

Im Besucherregister VLR sind ebenfalls virtuelle Teilnehmer VSN0, VSN1...VSNy... mit entsprechenden Teilnehmerdaten eingerichtet. Auf Grund des im Heimatregister HLR ausgewählten virtuellen Teilnehmers VSNx und der ihm zugeordneten und übertragenen Identifikationsnummer IMSI wird im Besucherregister VLR ein virtueller adressiert. Dies ist durch eine feste Zuordnung des virtuellen Teilnehmers VSNx im Heimatregister HLR zu dem virtuellen Teilnehmer VSNy im Besucherregister VLR für die Nutzung des speziellen Teilnehmerdienstes möglich. Den im Besucherregister VLR gespeicherten virtuellen Teilnehmern VSN0... ist jeweils eine bestimmte Gruppe von Zielteilnehmern zugeordnet, sodaß durch die Auswahl des virtuellen Teilnehmers VSNy die Zielgruppe feststeht. Die Zuordnung eines virtuellen Teilnehmers zu jeweils einzelnen mobilen Teilnehmern oder zu allen Teilnehmern ist ebenfalls möglich.

Aus der ermittelten Gruppe von Zielteilnehmern wird vom Besucherregister der physikalische mobile Zielteilnehmer bestimmt und eine den mobilen Zielteilnehmerer kennzeichnende Teilnehmernummer MSRN - die für gewöhnliche Anrufe ebenfalls verwendete "Roaming Number" - bereitgestellt und über eine Nachricht PRN-R (Provide Roaming Number Result) zum Heimatregister HLR übertragen. Zwischen dem Heimatregister HLR und dem gesonderten Mobilvermittlungssystem GMSC erfolgt die Übertragung einer Nachricht SRI-R (Send Routing Info Result) mit der Rufnummer MSISDN übertragen. Das gesonderte Mobilvermittlungssystem GMSC gibt die Nachricht wie üblich an das ausgewählte Besucherregister VLR weiter.

Sobald die Information, daß es sich bei dem gesonderten Anruf um einen Anruf zur Nutzung des mobilen Teilnehmerdienstes "Mobile Access Hunting" handelt, im Besucherregister VLR befindet - erkennbar an dem für diesen Teilnehmerdienst reservierten virtuellen Teilnehmer VSNy - wird ein Eintrag angelegt, mit dem mindestens eine mobilfunkspezifische Steuerungsfunktion SERVx - z.B. das Unterdrücken von den physikalischen mobilen Teilnehmern vorbehaltenen Teilnehmerdiensten wie "Call Waiting", "Call Hold" etc. - ausgelöst werden kann. Die weiteren Verfahrensschritte zur Herstellung einer Verbindung mit dem mobilen Zielteilnehmer der Zielgruppe erfolgt im Mobilfunknetz nach den durch den GSM-Standard festgelegten Maßnahmen.

Auf diese Weise kann ein nicht genormter mobiler Teilnehmerdienst von einer Gruppe von physikalischen Teilnehmern oder von einem einzelnen Teilnehmer oder auch von allen Teilnehmern genutzt werden, ohne daß die nach dem GSM-Verfahren standardisierten Prozeduren und Daten- bzw. Nachrichtenoperationen zwischen den einzelnen Einrichtungen des Vermittlungssystems zur Durchschaltung einer Verbindung zu einem mobilen Teilnehmer davon beeinträchtigt werden. Durch das Einrichten von virtuellen Teilnehmern in den Datenbasen des Vermittlungssystems - d.h. in den Registern HLR und VLR - brauchen die Signalisierungs- und Übertragungsprotokolle zwischen den Einrichtungen des Mobilfunknetzes und die dazugehörigen Schnittstellen nicht verändert zu werden. Das Erkennen des gesonderten Anrufs ist anhand des eingerichteten virtuellen Teilnehmers möglich.

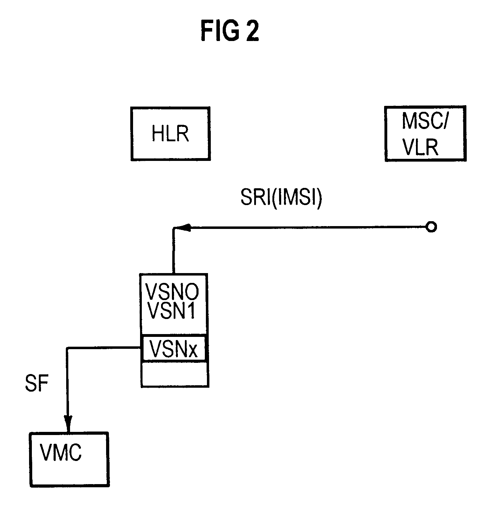

Figur 2 zeigt die Übertragung der Nachricht SRI zwischen dem Besucherregister VLR eines zugehörigen Mobilvermittlungssystems MSC und dem Heimatregister HLR. Die Nachricht enthält die üblicherweise einem mobilen Teilnehmer zugeordnete internationale Teilnehmeridentifikationsnummer IMSI. Anhand der empfangenen Identifikationsnummer IMSI wird einer der im Heimatregister HLR eingerichteten virtuellen Teilnehmer VSN0, VSN1...VSNx... festgelegt, um eine durch Auswahl des virtuellen Teilnehmers vorgegebene mobilfunkspezifische Steuerungsfunktion SF im Heimatregister HLR auszulösen. Die im Heimatregister HLR eine spezielle Behandlungsart nach sich ziehende Steuerungsfunktion SF besteht beispielsweise darin, eine Verbindung zu einer externen Einrichtung VMC - beispielsweise einem Voicemailcenter - herzustellen, die ein Pseudo-Besucherregister VLR darstellt und in einem anderen Telekommunikationsnetz als dem Mobilfunknetz realisiert ist. Eine andere Funktion, die durch den virtuellen Teilnehmer ausgelöst wird, ist die Auswahl eines bestimmten Mitglieds der bei Nutzung des mobilen Teilnehmerdienstes "Mobile Access Hunting" durch eine Gruppenrufnummer definierten Zielgruppe von mobilen Teilnehmern.

Der auszuwählende mobile Zielteilnehmer ist der in Bezug auf den anrufenden Teilnehmer am besten geeignete Teilnehmer - beispielsweise der zum anrufenden Teilnehmer örtlich am nähesten liegende mobile Teilnehmer. Zur Durchführung der neuen, von den üblichen Steuerungsfunktionen bei normierten Teilnehmerdiensten abweichenden Steuerungsfunktion SF sind die virtuellen Teilnehmer VSN0... im Heimatregister HLR gespeichert, wobei die "Roaming"-Funktion den virtuellen Teilnehmern nicht erlaubt ist. Auf diese Weise wird vom Heimatregister HLR eine Teilfunktion des mobilen Teilnehmerdienstes unter Verwendung von virtuellen Teilnehmern übernommen, die ansonsten eine Manipulation der Datenfelder durch zusätzliche Daten benötigte.

Der virtuelle Teilnehmer VSN0... ist kein physikalischer mobiler Teilnehmer, der eine Mobilstation mit entsprechenden Teilnehmerdaten in den Datenbasen aufweist. Dennoch werden den in den Registern HLR und HLR/VLR gespeicherten virtuellen Teilnehmern die Nummern MSISDN und IMSI wie gewöhnlichen physikalischen Teilnehmern zugeordnet. Daher kann auch die Nummer MSRN bei den Datenübertragungen zwischen den Speichereinrichtungen übertragen werden. Der virtuelle Teilnehmer VSN0... ist entweder im Heimatregister HLR allein oder im Heimatregister HLR und im Besucherregister VLR hinterlegt.

Eine weitere mobilfunkspezifische Steuerungsfunktion im Mobilfunknetz besteht darin, einen speziellen Anruf zu einem anderen Telekommunikationsnetz zu erkennen und in dem gesonderten Mobilvermittlungssystem als die geeignete Schnittstelle zum anderen Telekommunikationsnetz unter Verwendung des virtuellen Teilnehmers den Anruf als speziellen Anruf weiterzuschalten. Die Zieleinrichtung im anderen Telekommunikationsnetz, zu der der spezielle Anruf weitergeleitet werden soll - beispielsweise in Form des oben erwähnten Voice Mail Centers - wird als virtuelles Pseudo-Besucherregister festgelegt, zu der der spezielle Anruf unter Verwendung eines virtuellen Teilnehmers durch die Übertragung der Nachricht PRN erfolgt.

## Patentansprüche

1. Verfahren zur Durchschaltung von Verbindungen bei Anrufen von bzw. zu mobilen Teilnehmern eines zellularen digitalen Mobilfunknetzes unter Verwendung eines Vermittlungssystems mit Speichereinrichtungen(HLR, VLR), in denen die Teilnehmerdaten jedes mobilen Teilnehmers gespeichert werden,
**dadurch gekennzeichnet,**
daß in mindestens einer Speichereinrichtung (HLR oder HLR, VLR) virtuelle Teilnehmer (VSN0, VSN1...) eingerichtet werden und daß bei einem Anruf zu einem virtuellen Teilnehmer jeweils eine von den üblichen Steuerungsfunktionen abweichende mobilfunkspezifische Funktion ausgeführt wird.

2. Verfahren nach Anspruch 1,
**dadurch gekennzeichnet,**
daß die mobilfunkspezifische Funktion in der Durchschaltung einer Verbindung auf Grund eines gesonderten Anrufs von bzw. zu einem mobilen Teilnehmer besteht.

3. Verfahren nach Anspruch 2,
**dadurch gekennzeichnet,**
daß der gesonderte Anruf einen einzelnen mobilen Teilnehmer, eine Gruppe von mobilen Teilnehmern oder alle mobilen Teilnehmer betrifft.

4. Verfahren nach Anspruch 1,
**dadurch gekennzeichnet,**
daß durch die mobilfunkspezifische Funktion ein gesonderter mobiler Teilnehmerdienst ausgeführt wird.

5. Verfahren nach Anspruch 1,
**dadurch gekennzeichnet,**
daß durch die mobilfunkspezifische Funktion eine Verbindung zu einer externen Einrichtung (VMC) hergestellt wird.

6. Verfahren nach einem der Ansprüche 1 bis 5,
**dadurch gekennzeichnet,**
daß im Vermittlungssystem die virtuellen Teilnehmer (VSN0...) in einem Heimatregister (HLR) gespeichert und die Verbindungen von bzw. zu den mobilen Teilnehmern von einem Mobilvermittlungssystem (MSC) durchgeschaltet werden.

7. Verfahren nach einem der Ansprüche 1 bis 5,
**dadurch gekennzeichnet,**
daß im Vermittlungssystem die virtuellen Teilnehmer (VSN0...) in einem Heimatregister (HLR) und in mindestens einem Besucherregister (VLR) gespeichert und die Verbindungen von bzw. zu den mobilen Teilnehmern von einem Mobilvermittlungssystem (MSC) durchgeschaltet werden.
